**Europäisches Patentamt**

(19) **European Patent Office**

**Office européen des brevets**

(11) Publication number : **0 387 940 B1**

(12) **EUROPEAN PATENT SPECIFICATION**

(45) Date of publication of patent specification :
27.10.93 Bulletin 93/43

(51) Int. Cl.⁵ : **A23D 7/00**

(21) Application number : **90200519.8**

(22) Date of filing : **06.03.90**

(54) **Spread.**

The file contains technical information
submitted after the application was filed and
not included in this specification

(30) Priority : **17.03.89 GB 8906228**

(43) Date of publication of application :
**19.09.90 Bulletin 90/38**

(45) Publication of the grant of the patent :
**27.10.93 Bulletin 93/43**

(84) Designated Contracting States :
**AT BE CH DE DK ES FR GB GR IT LI NL SE**

(56) References cited :
**EP-A- 0 237 120**
**EP-A- 0 279 499**
**EP-A- 0 327 225**
**EP-A- 0 327 288**
**GB-A- 2 084 171**

(73) Proprietor : **UNILEVER N.V.**
**Weena 455**
**NL-3013 AL Rotterdam (NL)**

(84) **BE CH DE DK ES FR GR IT LI NL SE AT**
Proprietor : **UNILEVER PLC**
**Unilever House Blackfriars P.O. Box 68**
**London EC4P 4BQ (GB)**

(84) **GB**

(72) Inventor : **Livingston, Robert Middleton**
**52 Crosby Road**
**Westcliff-on-Sea, Essex (GB)**
Inventor : **MacNeill, Avril Brown**
**c/o Sorbrook House, Waterlane**
**Adderbury, Oxon, OX 173 LT (GB)**

(74) Representative : **Mulder, Cornelis Willem**
**Reinier, Dr. et al**
**UNILEVER N.V. Patent Division P.O. Box 137**
**NL-3130 AC Vlaardingen (NL)**

EP 0 387 940 B1

Jouve, 18, rue Saint-Denis, 75001 PARIS

## Description

The present invention is concerned with a spread of very low fat content. In particular the present invention relates to a spread containing from 23 to 29 wt.% of a continuous fat phase.

According to EP 0 237 120 very low fat spreads can be prepared with a fat content of less than 30%, a gelatin content of 2-5 wt% and a hydrolysed starch content of 5-15%. Although these conditions enable the preparation of a rather stable W/O dispersion, the quality was not satisfactory enough and should be much improved.

We have found that a spread of very low fat content, having an exceptional good quality as regards oral response, spreadability and stability can be obtained if said spread contains, in combination, gelatin and hydrolized starch. Accordingly the present invention is directed to a spread comprising from 23 to 29 wt.% of a continuous fat phase and 77 to 71 wt.% of an aqueous phase and further containing 2.0 to 4.5 wt% gelatin and 3.9 to 9.0 wt% hydrolized starch.

A further advantage of a spread of the formulation according to the invention is that such a spread can easily be manufactured as it does not require special equipment and moreover since the product quality is not easily affected by fluctuations in processing conditions and/or fat blend formulation; provided the N-line characteristics of the fat blend do not change substantially.

In a preferred embodiment of the present invention the hydrolized starch is a gelling hydrolized starch derivative. Spreads having a particularly pleasant oral response can be obtained if the hydrolized starch is maltodextrin. Furthermore hydrolized starches having a Dextrose Equivalent of less than 20, more preferably of less than 10, were found to impart very advantageous properties to the present spread.

In another preferred embodiment of the present invention the fat phase of the spread contains less than 7 % saturated fatty acid residues by weight of the product. The consumption of relatively large amounts of saturated fatty acid residues is known to increase the cholesterol content of the blood and may thus promote the risk of heart and vascular diseases. It is thus advantageous if a product contains a reduced amount of saturated fatty acid residues. The spread according to this preferred embodiment of the invention combines a very good product quality with an extremely low content of saturated fatty acid residues. Although spreads having a lower saturated fatty acid residues content have been described in the art, these prior art products have in common that they contain essentially no fat and are inferior to spreads containing substantial amounts of fat. In a very preferred embodiment of the invention the fat phase comprises from 3.5% - 6.0% of saturated fatty acid residues by weight of the product.

In addition to a low content of saturated fatty acid residues, the present spread preferably contains a high level of polyunsaturated fatty acid residues. Preferably the present spread contains polyunsaturated and saturated fatty acid residues in a weight ratio of at least 1.5, more preferably of at least 2.0. Furthermore the weight ratio of mono-unsaturated for saturated fatty acid residues, preferably exceeds 2.0.

The present invention encompasses spreads containing a continuous fat phase and an aqueous phase which may be either continuous or discontinuous. Preferably the present spread is an water-in-oil dispersion, i.e. preferably the aqueous phase of the present spread is composed of dispersed water droplets. It is to be understood that the term water-in-oil dispersion also encompasses dispersions of the duplex type wherein the dispersed aqueous phase contains a dispersed fat phase. Fat-continuous spreads containing a dispersed aqueous phase are characterized by a very low conductivity.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated, fractionated, interesterified or modified otherwise, as well as non-toxic fatty materials having properties similar to triglycerides, which materials may be indigestible, such as for example waxes, e.g. jojoba oil and hydrogenated jojoba oil, and polyol fatty acid polyesters. Throughout this application the terms fat and oil are deemed synonymous and used interchangeably.

The water droplet size of the dispersed aqueous phase is of influence on the flavour release, stability and appearance of the present spread. Products of a very good quality can be obtained if the water droplets have a number weighted mean diameter of 3-30 $\mu$m, more preferably of 4-15 $\mu$m. Whenever referred to in this document, the number weighted mean diameter is determined by means of NMR [see J. Colloid and Interface Science (1972) 10, 206 and (1983) 93, 521] using a log-normal distribution as is commonly employed for particle size analysis.

With regard to the product quality, in particular the oral response, the gelatin content employed in the present spread appears to be critical. According to the present invention the spread comprises 2.0 to 4.5 wt.% gelatin, preferably the gelatine content is in the range of 2.5 to 4.5 wt.%. Furthermore, preferably, the present spread comprises 3.5 to 9.0 wt.% hydrolized starch.

The aqueous phase, in addition to gelatin and hydrolized starch, may suitably include other ingredients such as thickening agents, gelling agents, salt and flavour ingredients. Suitable thickening agents are, for instance, gums like guar gum, locust bean gum and xanthan gum. Examples of gelling agents that may suitably be incorporated in the aqueous phase are carrageenan, calcium caseinate, pectin and alginate.

The aqueous phase of the spread according to the present invention preferably has been acidified to a pH in the range of 4.8 to 5.5. A pH within this range guarantees an acceptable microbiological stability in combination with a good taste. The aqueous phase composition may have been prepared from normal tap water, but also from aqueous compositions of dairy origin such as for instance skim milk. In case skim milk is used in the preparation of the aqueous phase composition it can be advantageous from a microbiological point of view to use reconstituted skim milk.

According to yet another preferred embodiment the fat phase of the present spread has an $N_{10}$ value in the range of 10-25 an $N_{20}$ in the range of 5-15 and an $N_{35}$ of less than 3. Spreads according to the invention comprising such a fat phase are found to be relatively quick melting in the mouth and are easily spreadable even when taken directly from the refrigerator. The N-value at a certain temperature may be determined by means of NMR, using the method described in "Fette, Seifen, Anstrichmittel", 80 (1978), 180-186.

The fat phase of the present spread may comprise several ingredients such as colouring agents, flavourings, vitamins and emulsifiers. Examples of emulsifiers which may suitably be incorporated in the fat phase of the present product are: monoglycerides, diglycerides and phosphatides.

Another aspect of the present invention is a process for the preparation of a spread containing less than 29 wt.% of a continuous fat phase and at least 71 wt.% of an aqueous phase, wherein a water-continuous emulsion containing 2.0 to 4.5 wt.% gelatin, 3.5 to 9.0 wt.% hydrolized starch and from 15 to 29 wt.% fat is cooled from above 40°C to below 20°C and subjected to sufficient shear to effect phase-inversion into a fat-continuous emulsion. We have found that the use of a phase-inversion process produces exceptionally good products and can be controlled relatively easily.

The present process can be carried out by means of processing equipment well known in the art of spread manufacture. Examples of apparatus that can be used in the manufacture of the present spread are scraped surface heat exchangers (Votators ™), crystallizers (C-units), resting tubes, cavity transfer mixers, static mixers, resting tubes, pressure valves and static heat exchangers such as cooling coils. Preferably in the process according to the invention, cooling is effected by means of scraped surface heat exchanger(s) and/or cooling coil(s). The phase-inversion, preferably, is effected in a crystallizer or static mixer.

It is an essential aspect of the present process that the water-continuous emulsion be cooled to a sufficiently low temperature. If the emulsion is insufficiently cooled, no inversion or only partial inversion is obtained. According to a preferred embodiment of the invention the water-continuous emulsion is cooled to a temperature in the range of 9-16°C.

As said above the phase-inversion can suitably be effected in apparatus such as a crystallizer or a static mixer. In such apparatus phase-inversion is effected under essentially adiabatic conditions. Due to the conditions of shear employed in such units to bring about phase-inversion a substantial temperature increase is normally observed. Thus, preferably, in the present process phase-inversion is effected under essentially adiabatic conditions and accompanied by a temperature increase of at least 2°C.

The present invention is further illustrated by means of the following example:

Example 1

A spread of very low fat content (27.5 wt.%) was prepared from the following ingredients (in % by weight of total product):

### Fat phase

| | |
|---|---|
| Rape seed oil | 12.1 |
| Rape seed oil hardened to a slip melting point of 32°C | 9.4 |
| Palm oil | 5.4 |
| Dimodan OT TM (monoglyceride) | 0.5 |
| Lecithin (Bolec Z) | 0.2 |
| Beta-carotene (6% suspension in oil) | 0.012 |

### Aqueous phase

| | |
|---|---|
| Paselli SA2 TM (maltodextrin) | 9.0 |
| Gelatin 250 bloom | 2.5 |
| Salt | 1.0 |
| Sorbic acid | 0.12 |
| Lactic acid (15% solution) to a pH of 4.8 | |

Water to 100%

The spread was prepared by first separately preparing the aqueous phase composition and fat phase composition and then feeding the two compositions in separate streams (both having a temperature of about 50°C) via a proportioning pump to the production line. In the proportioning pump the fat blend and aqueous phase composition were combined in a weight ratio of 27.5:72.5. From the proportioning pump the emulsion was fed, at a throughput of 3.5 tons/hr, through two scraped surface heat exchangers (Votators ™), followed by a C-unit and yet another scraped surface heat exchanger, after which the product was filled into tubs. The three scraped surface heat exchangers had a diameter of 10 inch. The exit temperature of the emulsion from the second Votator was 15°C. After the C-unit the emulsion had reached a temperature of 20°C and the filling temperature was 18°C. The C-unit was operated at 700 rpm and the first, second and third Votator were operated at 240, 220 and 210 rpm respectively.

The pH of the product was found to be 5.0. The concentration level of saturated fatty acid residues in the product appeared to be in the range of 5.5 to 5.6 wt.%. The spread was evaluated by a professional test panel who found that the product had a smooth appearance which was very similar to spreads of substantially higher fat content and moreover that the product broke down quickly in the mouth.

Furthermore the spread did not show syneresis upon spreading and appeared to be easy spreadable even when taken from a refrigerator. The $C_5$ and $C_{20}$ value of the spread were found to be 500 and 150 respectively indicating that the product has the advantageous property that it is relatively soft at 5°C and relatively firm at 20°C. The number weighted mean diameter of the aqueous phase is found to be below 30 microns.

During the preparation of the spread it was observed that the processing conditions could be varied substantially while still obtaining a spread of acceptable quality. Also when the fat blend composition was varied good products could be obtained.

The incorporation of an additional C-unit (180 rpm) after the last A-unit was found to produce a spread of good quality.

Example 2

A very low fat spread containing 27.3 wt.% of a continuous fat phase and 72.7 wt.% of a dispersed aqueous phase was prepared, using the following formulation (ingredients in % by weight of product):

```
Fat phase
Fat blend 1                              27.0
Hymono 4404 TM (monoglycerides)           0.3
Beta carotene                            trace


Aqueous phase
Paselli SA2 TM                            6.0
Geltec TM Gelatin (bloom 250)            2.5
Potassium sorbate                        0.12
Sodium chloride                          0.3
Flavour                                  trace
pH to 5.1 with citric acid
Water to 100%
```

$^1$ The fat blend was characterized by the following N-values: $N_{10}=29$, $N_{20}=12$, $N_{30}<4$ and $N_{35}<2$.

The above fat phase and aqueous phase were admixed at a temperature of 50°C in a pre-mix vessel. The water-continuous emulsion so obtained was fed through a production line consisting of a sequence of two scraped surface heat exchangers (A-units), two crystallizers (C-units), another scraped surface heat exchanger and another crystallizer, at a throughput of 120 kg/hr. The crystallizers used all had the same volume. The following processing conditions were employed

| Unit | Exit temp. (°C) |
|------|------|
| First A-unit | 21 |
| Second A-unit | 14 |
| First C-unit | 16 |
| Second C-unit | 26 |
| Third A-unit | 15 |
| Third C-unit | 17 |

Phase-inversion of the water-continuous emulsion was obtained in the second C-unit, rotating at 1700 rpm.

The product so obtained was found to have a conductivity of 1 microSiemens/cm at 15°C, which clearly shows that the product is a water-in-oil dispersion. The hardness of the product measured at 5°, 10°, 15° and 20°C respectively, was found to be 720, 510, 180 and 110 g/cm$^2$. The product was deemed to be easy spreadable and had a pleasant mouthfeel. The number weighted mean diameter of the aqueous phase is below 30 microns.

**Claims**

1. Spread comprising from 23 to 29 wt.% of a continuous fat phase and 77 to 71 wt.% of an aqueous phase and further containing 2.0 to 4.5 wt.% gelatin and 3.5 to 9.0 wt.% hydrolized starch.

2. Spread according to claims 1, wherein the fat phase comprises less than 7% saturated fatty acid residues by weight of the product.

3. Spread according to claim 1 or 2, wherein the aqueous phase is composed of dispersed water droplets.

4. Spread according to claim 3, wherein the water droplets have a number weighted mean diameter of 3-30 μm (microns).

5. Spread according to any one of claims 1-4, wherein the fat phase has an $N_{10}$ value in the range of 10-25, an $N_{20}$ in the range of 5-15 and an $N_{35}$ of less than 3.

6. Process for the preparation of a spread containing less than 29 wt.% of a continuous fat phase and at least 71 wt.% of an aqueous phase, wherein a water-continuous emulsion containing 2.0 to 4.5 wt.% gelatin, 3.5 to 9.0 wt.% hydrolized starch and from 15 to 29 wt.% fat is cooled from above 40°C to below 20°C and subjected to sufficient shear to effect phase-inversion into a fat-continuous emulsion.

7. Process according to claim 6, wherein the water-continuous emulsion is cooled to a temperature in the range of 9-16°C.

8. Process according to claim 6 or 7, wherein phase-inversion is effected under essentially adiabatic conditions and accompanied by a temperature increase of at least 2°C.

**Patentansprüche**

1. Brotaufstrich, der 23 bis 29 Gew.-% einer kontinuierlichen Fettphase und 77 bis 71 Gew.-.% einer Wasserphase umfaßt und weiterhin 2,0 bis 4,5 Gew.-% Gelatine und 3,5 bis 9,0 Gew.-% hydrolysierte Stärke enthält.

2. Brotaufstrich nach Anspruch 1, worin die Fettphase weniger als 7 Gew.-% gesättigte Fettsäurereste, bezogen auf das Produkt, umfaßt.

3. Brotaufstrich nach den Ansprüchen 1 oder 2, worin die Wasserphase aus dispergierten Wassertröpfchen zusammengesetzt ist.

4. Brotaufstrich nach Anspruch 3, worin die Wassertröpfchen einen zahlenmäßig gewichteten mittleren Durchmesser von 3 bis 30 μm (Mikrometer) haben.

5. Brotaufstrich nach einem der Ansprüche 1 bis 4, worin die Fettphase einen $N_{10}$-Wert im Bereich von 10 bis 25, einen $N_{20}$ im Bereich von 5 bis 15 und einen $N_{35}$ von weniger als 3 hat.

6. Verfahren zur Herstellung eines Brotaufstrichs, der weniger als 29 Gew.-% einer kontinuierlichen Fettphase und mindestens 71 Gew.-% einer Wasserphase enthält, in welchem eine wasserkontinuierliche Emulsion, enthaltend 2,0 bis 4,5 Gew.-% Gelatine, 3,5 bis 9,0 Gew.-% hydrolysierte Stärke und 15 bis 29 Gew.-% Fett, von über 40°C auf unter 20°C gekühlt und hinreichenden Scherkräften unterworfen wird, um eine Phaseninversion in eine fettkontinuierliche Emulsion zu bewirken.

7. Verfahren nach Anspruch 6, in welchem die wasserkontinuierliche Emulsion auf eine Temperatur im Bereich von 9 bis 16°C gekühlt wird.

8. Verfahren nach den Ansprüchen 6 oder 7, in welchem die Phaseninversion unter im wesentlichen adiabatischen Bedingungen vorgenommen wird und von einem Temperaturanstieg von mindestens 2°C begleitet ist.

**Revendications**

1. Produit à tartiner comprenant de 23 à 29% en poids d'une phase grasse continue et 77 à 71% en poids d'une phase aqueuse et contenant de plus 2,0 à 4,5% en poids de gélatine et 3,5 à 9,0% en poids d'amidon hydrolysé.

2. Produit à tartiner selon la revendication 1, dans lequel la phase grasse comprend moins de 7% de résidus d'acide gras saturé en poids du produit.

3. Produit à tartiner selon la revendication 1 ou 2, dans lequel la phase aqueuse est composée de gouttelettes d'eau dispersées.

4. Produit à tartiner selon la revendication 3, dans lequel les gouttelettes d'eau ont un diamètre moyen pondéré en nombre de 3 à 30 micromètres.

5. Produit à tartiner selon l'une quelconque des revendications 1 à 4, dans lequel la phase grasse a un indice $N_{10}$ dans la gamme de 10 à 25, un indice $N_{20}$ dans la gamme de 5 à 15, et un indice $N_{35}$ inférieur à 3.

6. Procédé pour la préparation d'un produit à tartiner contenant moins de 29% en poids d'une phase grasse continue et au moins 71% en poids d'une phase aqueuse, dans lequel une émulsion continue aqueuse contenant 2,0 à 4,5% en poids de gélatine, 3,5 à 9,0% en poids d'amidon hydrolysé et de 15 à 29% en poids de matière grasse est refroidie d'une température supérieure à 40°C à une température inférieure à 20°C et est soumise à un cisaillement suffisant pour effectuer une inversion de phase en une émulsion continue grasse.

7. Procéde selon la revendication 6, dans lequel l'émulsion aqueuse continue est refroidie à une température dans la gamme de 9 à 16°C.

8. Procédé selon la revendication 6 ou 7, dans lequel l'inversion de phase est réalisée dans des conditions essentiellement adiabatiques et accompagnée par une augmentation de température d'au moins 2°C.